## Europäisches Patentamt

## European Patent Office

## Office européen des brevets

(19)

(11) Veröffentlichungsnummer: **0 032 383**
**B1**

(12)

# EUROPÄISCHE PATENTSCHRIFT

(45) Veröffentlichungstag der Patentschrift:
19.01.83

(21) Anmeldenummer: **81100078.5**

(22) Anmeldetag: **08.01.81**

(51) Int. Cl.³: **B 28 D 1/04**, B 23 D 47/04,
B 24 B 27/06

(54) **Trennmaschine für Werkstücke.**

(30) Priorität: **12.01.80 DE 8000695 U**
**15.07.80 DE 3026687**

(43) Veröffentlichungstag der Anmeldung:
**22.07.81 Patentblatt 81/29**

(45) Bekanntmachung des Hinweises auf die Patenterteilung:
**19.01.83 Patentblatt 83/3**

(84) Benannte Vertragsstaaten:
**AT BE CH DE FR GB IT LI LU NL SE**

(56) Entgegenhaltungen:
**CH-A-202 915**
**CH-A-582 561**
**DE-C-64 453**
**DE-C-634 144**
**FR-A-1 424 470**
**FR-A-2 142 137**
**LU-A-32 070**
**US-A-2 062 969**
**US-A-2 464 117**
**US-A-2 465 000**

(73) Patentinhaber: **Strahl, Franz Nikolaus, Lupinenweg 29,**
**D-7910 Neu-Ulm/Pfuhl (DE)**

(72) Erfinder: **Strahl, Franz Nikolaus, Lupinenweg 29,**
**D-7910 Neu-Ulm/Pfuhl (DE)**

(74) Vertreter: **Hoeger, Stellrecht & Partner,**
**Uhlandstrasse 14c, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Trennmaschine für Werkstücke

Die Erfindung betrifft eine Trennmaschine für Werkstücke, insbesondere Platten, Tafeln und andere Körper aus Naturstein, Kunststein, Keramik, Glas, Kunststoff, Holz, Metall und dergleichen mit einer an einem kippbaren Führungsrahmen geführten Trennscheibe und einem das Werkstück aufnehmenden, auf einem Maschinengestell abgestützten Auflagetisch.

Eine solche Maschine ist aus der CH-A-582 561 bekannt. Bei der Ausführung eines Gehrungsschnittes von z. B. 45° muß der Führungsrahmen mit der daran befestigten Trennscheibe um den gleichen Winkel gekippt und festgestellt werden.

Bei einer anderen, aus der US-A-2 062 969 bekannten Trennmaschine ist ein die Trennscheibe tragender Führungsrahmen nicht kippbar ausgebildet. Statt dessen muß ein Teil des Auflagetisches gekippt werden, und zwar ebenfalls um einen Winkel, welcher dem des auszuführenden Gehrungsschnitts gleich ist.

Es ist Aufgabe der Erfindung, eine Trennmaschine vorzuschlagen, bei denen kippbare Teile bei Ausführung eines Gehrungsschnittes nicht um den gesamten Gehrungswinkel verkippt werden müssen.

Die Aufgabe wird erfindungsgemäß dadurch gelöst, daß der Auflagetisch aus zwei entlang einer parallel zum Führungsrahmen verlaufenden Achse gelenkig miteinander verbundenen Teilen besteht, von denen das erste Teil starr am Führungsrahmen befestigt und das zweite Teil bei gekipptem Führungsrahmen am Maschinengestell arretierbar ist.

Hierdurch wird beim Kippen des die Trennscheibe tragenden Führungsrahmens ein Teil des das Werkstück aufnehmenden Auflagetisches automatisch mitgekippt, so daß insgesamt nur eine Kippung von Führungsrahmen und Auflagetisch um den halben Gehrungswinkel erforderlich ist.

Die nachstehende Beschreibung bevorzugter Ausführungsformen der Erfindung dient im Zusammenhang mit der Zeichnung der weiteren Erläuterung. Es zeigt

Fig. 1 eine schaubildliche Ansicht einer Trennmaschine mit einer zu schneidenden Platte in waagerechter Stellung,

Fig. 2 die Trennmaschine aus Fig. 1 bei Ausführung eines Gehrungsschnittes,

Fig. 3 eine abgewandelte Ausführungsform der Maschine aus Fig. 1 mit höhenverstellbarer Trennscheibe,

Fig. 4 eine schematische Darstellung der Maschine bei Ausführung eines geraden Schnittes,

Fig. 5 eine schematische Darstellung der Maschine bei Ausführung eines Gehrungsschnittes.

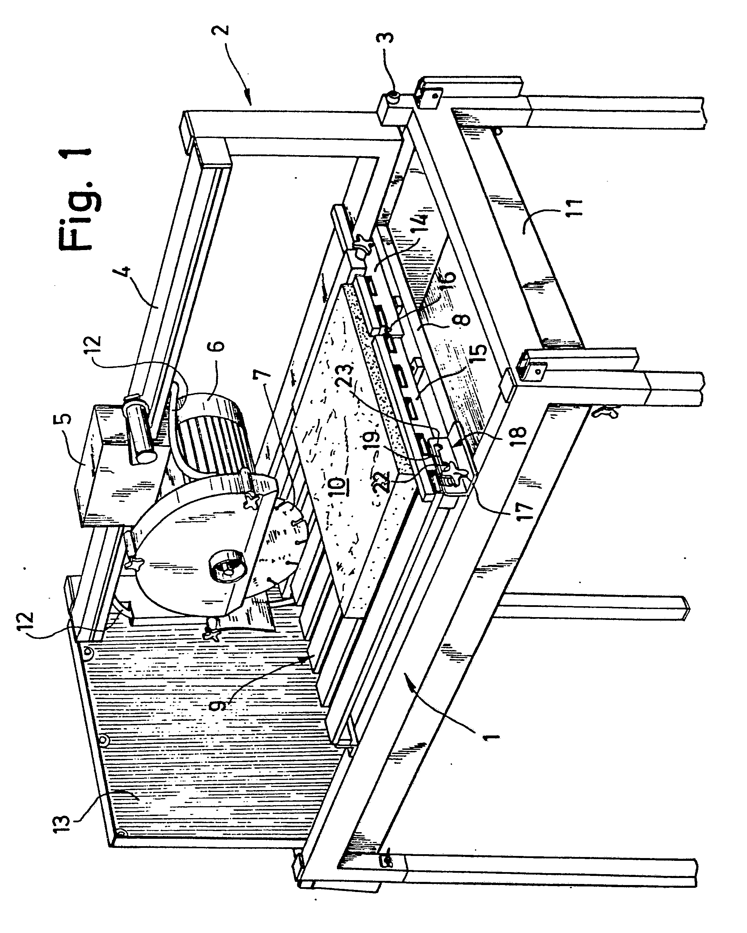

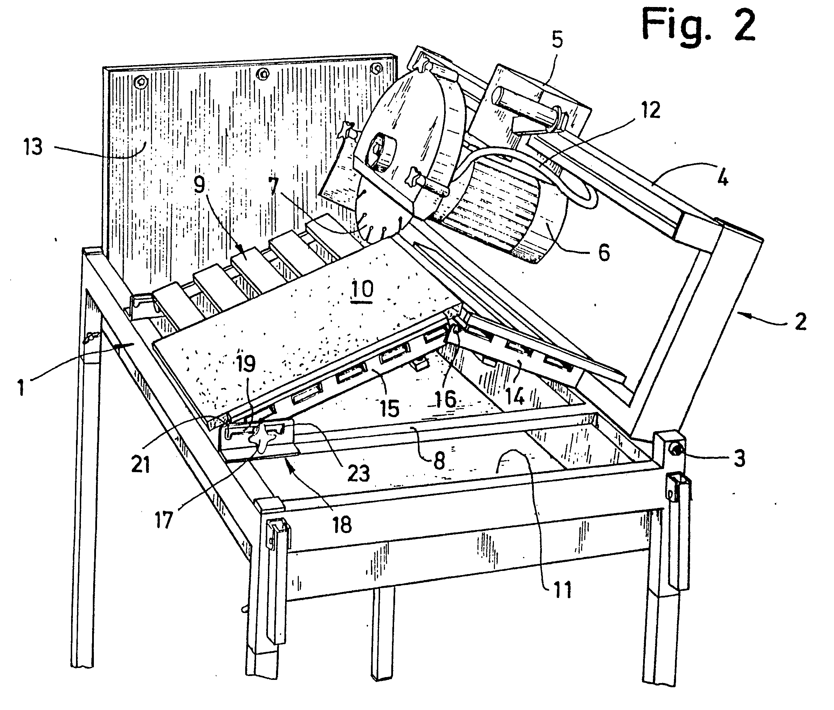

An einem Maschinengestell 1 ist ein Führungsrahmen 2 in zwei einander gegenüberliegenden Drehlagern, von denen in Fig. 1 nur das Drehlager 3 sichtbar ist, kippbar gelagert. Der Führungsrahmen 2 kann von der in Fig. 1 gezeichneten Stellung in die in Fig. 2 dargestellte Lage verschwenkt werden. Der Führungsrahmen 2 trägt eine geradlinige Gleitführung 4, an welcher eine von einem Support 5 gehaltene, einen Antriebsmotor 6 aufweisende Kreissäge mit einer als Kreissägeblatt ausgebildeten Trennscheibe 7 hin- und herverschieblich ist.

Das Maschinengestell 1 ist an seiner Oberseite von einer Tischunterlage in Form zweier Leisten überbrückt, von denen auf der Zeichnung lediglich die vordere Leiste 8 sichtbar ist. Auf der Tischunterlage stützt sich ein Auflagetisch 9 zur Aufnahme eines zu durchtrennenden Werkstückes 10 ab. Das Werkstück 10 kann beispielsweise eine Tafel aus Natur- oder Kunststein oder aus Kunststoff sein und liegt mit seiner Unterseite auf einem rutschfesten Gummibelag des Auflagetisches 9 auf. Zum Durchtrennen des Werkstückes 10 wird die Trennscheibe 7 an der Gleitführung 4 entlang bewegt.

Am Maschinengestell ist weiterhin eine Wanne 11 zur Aufnahme von Kühlflüssigkeit vorgesehen. Die Kühlflüssigkeit wird in bekannter Weise über eine nicht dargestellte Pumpe ständig abgesaugt und über Schlauchleitungen 12 der rotierenden Trennscheibe 7 zu deren Kühlung zugeleitet. Das Kühlmittel fließt anschließend wieder in die Wanne 11 ab, um von da erneut abgesaugt zu werden. Eine Gummiplatte 13 am hinteren Ende des Maschinengestells 1 dient als Spritzschutz.

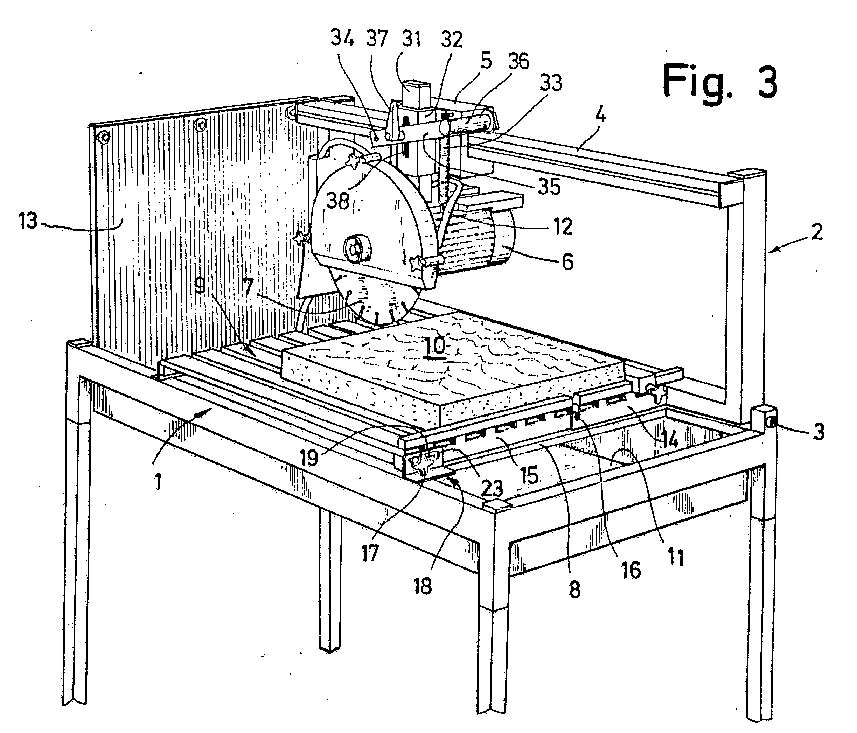

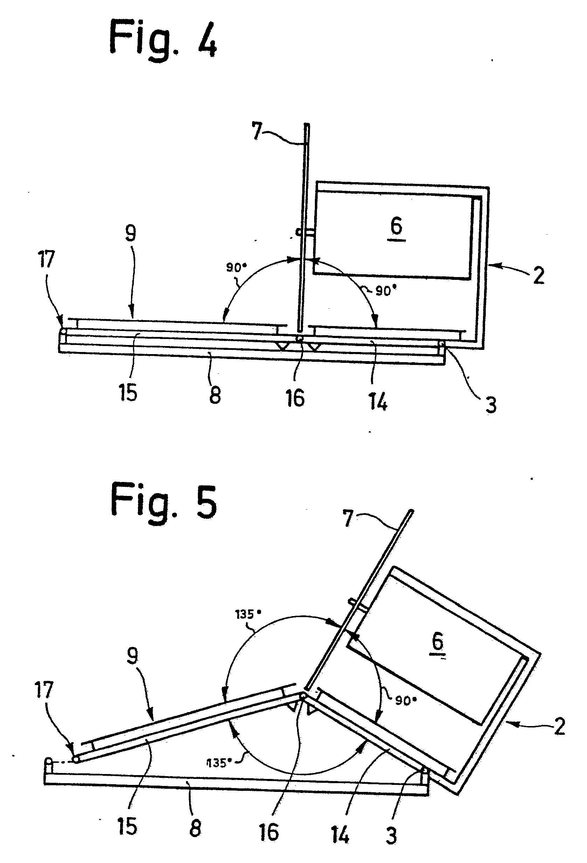

Wie am besten aus Fig. 2 und 5 hervorgeht, besteht der Auflagetisch 9 aus zwei entlang einer zur Gleitführung 4 parallel verlaufenden Achse schwenkbaren Teilen, nämlich einem ersten Teil 14 und einem zweiten Teil 15. Die Gelenkachse, an welcher die beiden Teile gelenkig miteinander verbunden sind, ist auf der Zeichnung mit dem Bezugszeichen 16 bezeichnet. Das erste Teil 14 des Auflagetisches ist starr mit dem kippbaren Führungsrahmen 2 verbunden. Vom zweiten, mit dem ersten gelenkig verbundenen Teil 15 des Auflagetisches steht in der Nähe seiner freien Kante ein mit einem Kreuzgriff 17 versehener Schraubbolzen ab, der in einer fest mit dem Maschinengestell 1 verbundenen Schlitzführung 18 gleitet und durch Anziehen der Schraube im Schlitz 19 der Schlitzführung feststellbar ist, wodurch der Auflagetisch arretiert werden kann. Wie dargestellt, weist der Schlitz 19 der Schlitzführung 18 drei Nuten 21, 22, 23 auf, in welche der Schraubbolzen einrasten kann. Die auf der Zeichnung links gelegene Nut 21 entspricht der waagrechten, in Fig. 1 und 3 dargestellten Position des Auflagetisches 9.

Wird der Führungsrahmen 2 im Uhrzeigersinn nach rechts gekippt, so stellt sich das starr mit ihm verbundene Teil 14 des Auflagetisches schräg und nimmt das daran gelenkig befestigte Teil 15 mit, welches ebenfalls eine Schräglage einnimmt. Diese Schräglage des Teils 15 ist mit Hilfe der Schlitzführung 18 und des erwähnten Schraubbolzens stufenlos einstellbar. Die erwähnten Nuten 22, 23 sind am Schlitz 19 vorteilhafterweise so angeordnet, daß sie einer Schräglage des Tischteiles 15 entsprechen, in welcher mittels der dann ebenfalls schrägstehenden Trennscheibe 7 Gehrungsschnitte von 45 bzw. 30° ausgeführt werden können (vgl. Fig. 2).

Es wurde gefunden, daß die Anordnung in der in Fig. 2 dargestellten Schräglage bereits durch Einrasten des erwähnten Schraubbolzens in die Nuten 22 oder 23 so stabil gehalten ist, daß ein Anziehen des Kreuzgriffes 17 nicht mehr erforderlich ist.

Wie insbesondere aus Fig. 2 hervorgeht, kann bei Ausführung eines schrägen Gehrungsschnittes die volle Schneidtiefe der Trennscheibe 7 ausgenutzt werden. In Fig. 4 und 5 sind die Winkelverhältnisse bei senkrechtem und Gehrungsschnitt noch einmal übersichtlich dargestellt.

Die beschriebene Trennmaschine eignet sich insbesondere für Platten, Tafeln und andere Körper aus Naturstein, Kunststein, Keramik, Glas, Kunststoff, Holz, Metall und dergleichen. Vorteilhaft ist es, wenn die gelenkige Verbindung der beiden Teile 14 und 15 des Auflagetisches 9 entlang der Achse 16 mit Hilfe von aushängbaren Scharnieren (nicht dargestellt) erfolgt, so daß das Teil 15 leicht vom Teil 14 abgehängt werden kann, falls beispielsweise eine Säuberung der Wanne 11 durchgeführt werden soll. Anstelle des erwähnten Schraubbolzens mit dem Kreuzgriff 17 könnte natürlich auch eine Knebelschraube vorgesehen sein. Wie aus der Zeichnung hervorgeht, ist die Kippbewegung des Führungsrahmens 2 dadurch begrenzt, daß der erwähnte Schraubbolzen in der Schlitzführung 18 am rechten Ende des Schlitzes 19 (Nut 23) anschlägt. Ein unerwünschtes Umkippen des Führungsrahmens 2 ist damit ausgeschlossen. Normalerweise reicht es aus, den Führungsrahmen 2 von Hand zu kippen. Bei anderen Ausführungsformen der Erfindung kann jedoch eine beispielsweise elektrische, hydraulische oder pneumatische Antriebsvorrichtung zur Kippung des Führungsrahmens in an sich bekannter Weise vorgesehen sein.

Die in Fig. 3 dargestellte Ausführungsform der Erfindung unterscheidet sich von der Ausführungsform gemäß Fig. 1 und 2 dadurch, daß die Trennscheibe 7 bezüglich des Werkstückes 10 höhenverstellbar ist. Hierzu ist die Kreissäge in an sich bekannter Weise mittels einer Leiste 31 und einer diese umgreifenden Manschette 32 vertikal hin- und herverschieblich. Die Manschette 32 ist fest mit dem auf der Gleitführung 4 verschieblichen Support 5 verbunden, während die Leiste 31 die Kreissäge mit deren Motor 6 trägt. Eine Feder 33 spannt die Kreissäge in ihre obere Lage vor. Ein bei 34 drehbar aus Support 5 gelagerter Hebel 35 mit Handgriff 36 trägt lose drehbar eine Knebelschraube 37, die einen Schlitz 38 in der Manschette 32 durchdringt und in eine Gewindebohrung in der Leiste 31 eingeschraubt ist. Nach Lösen der Schraube 37 kann die Höhe der Kreissäge durch Verschwenken des Hebels 35 eingestellt werden. Dies ist insbesondere beim Trennen langer Werkstücke wichtig, die sich bis nahe an die hintere Gummiplatte 13 heranerstrecken. In diesem Falle senkt man die Trennscheibe von oben her in das Werkstück 10 ein bis ein bis zum hinteren Rand des Werkstückes reichender Schnitt erzeugt ist und schiebt alsdann die Trennscheibe 7 entlang der Gleitführung 4 nach vorne, bis das gesamte Werkstück durchtrennt ist.

Besondere Vorteile der beschriebenen Trennmaschine liegen unter anderem darin, daß die Umstellung von senkrechtem auf Gehrungsschnitt und umgekehrt äußerst rasch und praktisch durch einen einzigen Handgriff durchführbar ist. Bei Ausführung eines Gehrungsschnittes hat man eine ausgezeichnete Übersicht über die Schnittstelle, weil die Trennscheibe nicht über das auf dem Teil 15 des Auflagetisches 9 liegende Werkstück 10 ragt. Außerdem kann in jeder Schrägstellung der Maschine die volle Schnittiefe der Trennscheibe 7 ausgenutzt werden, da diese genau im Bereich der Gelenkachse 16 zwischen die beiden Tischteile 14 und 15 eingreift.

Wie insbesondere aus Fig. 2 hervorgeht, können mit der erfindungsgemäßen Trennmaschine auch sehr lange Werkstücke (bis zu ca. 2 m) im Gehrungsschnitt zersägt werden. Die langen, auf dem Teil 15 des Auflagetisches 9 aufliegenden Werkstücke 10 ragen dabei seitlich schräg nach unten über das Maschinengestell 1 hinaus und können nötigenfalls mit einer Schraubzwinge am Teil 15 festgespannt werden.

## Patentansprüche

1. Trennmaschine für Werkstücke (10), insbesondere Platten, Tafeln und andere Körper aus Naturstein, Kunststein, Keramik, Glas, Kunststoff, Holz, Metall und dergleichen mit einer an einem kippbaren Führungsrahmen (2) geführten Trennscheibe (7) und einem das Werkstück (10) aufnehmenden, auf einem Maschinengestell (1) abgestützten Auflagetisch (9), dadurch gekennzeichnet, daß der Auflagetisch (9) aus zwei entlang einer parallel zum Führungsrahmen (2) verlaufenden Achse (16) gelenkig miteinander verbundenen Teilen (14, 15) besteht, von denen das erste Teil (14) starr am Führungsrahmen (2) befestigt und das zweite Teil (15) bei gekipptem Führungsrahmen (2) am Maschinengestell (1) arretierbar ist.

2. Trennmaschine nach Anspruch 1, dadurch gekennzeichnet, daß die beiden Teile (14, 15) des Auflagetisches (9) durch aushängbare Scharniere miteinander verbunden sind.

3. Trennmaschine nach Anspruch 1 oder 2, dadurch gekennzeichnet, daß die Arretierung des zweiten Teils (15) des Aufnahmetisches (9) einen an einer Schlitzführung (18, 19) stufenlos feststellbaren Schraubbolzen (17) umfaßt.

4. Trennmaschine nach Anspruch 3, dadurch gekennzeichnet, daß der Schraubbolzen als Kreuzgriff- oder Knebelschraube ausgebildet ist.

5. Trennmaschine nach einem der Ansprüche 1 bis 4, dadurch gekennzeichnet, daß das zweite Teil (15) des Auflagetisches (9) an vorgegebenen Raststellen (21, 22, 23) arretierbar ist.

6. Trennmaschine nach einem der voranstehenden Ansprüche, dadurch gekennzeichnet, daß die Schlitzführung (18, 19) Rastnuten (21, 22, 23) aufweist, in welche ein Gleitbolzen (17) beim Kippen des Führungsrahmens (2) einrastet.

7. Trennmaschine nach Anspruch 6, dadurch gekennzeichnet, daß die Rastnuten (22, 23) einen Gehrungsschnittwinkel von 45 oder 30° bestimmen.

8. Trennmaschine nach einem der voranstehenden Ansprüche, dadurch gekennzeichnet, daß die Schlitzführung (18, 19) die Kippbewegung des Führungsrahmens (2) begrenzt.

9. Trennmaschine nach einem der voranstehenden Ansprüche, dadurch gekennzeichnet, daß der Führungsrahmen (2) mittels einer Antriebsvorrichtung kippbar ist.

10. Trennmaschine nach einem der voranstehenden Ansprüche, dadurch gekennzeichnet, daß die Trennscheibe (7) höhenverstellbar ist (Fig. 3).

## Claims

1. Severing machine for workpieces (10), especially boards, panels and other bodies made of natural stone, artifical stone, ceramic, glass, plastic, wood, metal and the like, with a severing disc (7) guided on a tiltable guide frame (2) and with a resting table (9) receiving the workpiece (10) and supported on a machine stand (1), characterised in that the resting table (9) consists of two parts (14, 15) which are articulated to one another along an axis (16) extending parallel to the guide frame (2) and the first part (14) of which is fastened rigidly to the guide frame (2) and the second part (15) of which can be locked on the machine stand (1) when the guide frame (2) is tilted.

2. Severing machine according to Claim 1, characterised in that the two parts (14, 15) of the resting table (9) are connected to one another by disengagable hinges.

3. Severing machine according to Claim 1 or 2, characterised in that the lock of the second part (15) of the receiving table (9) comprises a screw bolt (17) which can be fixed continuously against a slotted guide (18, 19).

4. Severing machine according to Claim 3, characterised in that the screw bolt is designed as a starknob or tommy screw.

5. Severing machine according to one of Claims 1 to 4, characterised in that the second part (15) of the resting table (9) can be locked at pre-determined engagement points (21, 22, 23).

6. Severing machine according to one of the preceding claims, characterised in that the slotted guide (18, 19) has engagement grooves (21, 22, 23) into which a sliding bolt (17) engages when the guide frame (2) is tilted.

7. Severing machine accoridng to Claims 6, characterised in that the engagement grooves (22, 23) determine a mitre cutting angle of 45 or 30°.

8. Severing machine according to one of the preceding claims, characterised in that the slotted guide (18, 19) limits the tilting movement of the guide frame (2).

9. Severing machine according to one of the preceding claims, characterised in that the guide frame (2) can be tilted by means of a drive device.

10. Severing machine according to one of the preceding claims, characterised in that the severing disc (7) is vertically adjustable (Fig. 3).

## Revendications

1. Machine à tronçonner des pièces (10), notamment des plaques, tables, et autres corps en pierre naturelle, pierre artificielle, céramique, verre, bois, matière plastique, métal et analogues, comprenant un disque de tronçonnage (7) guidé sur un châssis de guidage basculant (2) et une table support (9) en appui sur un bâti de machine (1), qui reçoit la pièce (10), caractérisée en ce que la table support (9) est composée de deux parties (14, 15) réunies entre elles de façon articulée de long d'un axe (16) qui s'étend parallèlement au châssis de guidage (2), dont la première partie (14) est fixée rigidement au châssis de guidage (2) et la deuxième partie (15) peut être bloquée sur le bâti (1) de la machine lorsque le châssis de guidage (2) a basculé.

2. Machine à tronçonner suivant la revendication 1, caractérisée en ce que les deux parties (14, 15) de la table support (9) sont reliées l'une à l'autre par des charnières dégondables.

3. Machine à tronçonner suivant la revendication 1 ou 2, caractérisée en ce que le blocage de la deuxième partie (15) de la table support (9) comprend une vis (17) pouvant être immobilisée sans palier sur un guide à fente (18, 19).

4. Machine à tronçonner suivant la revendication 3, caractérisée en ce que la vis est réalisée sous la forme d'une vis à poignée croisillon ou à manette.

5. Machine à tronçonner suivant l'une des revendications 1 à 4, caractérisée en ce que la deuxième partie (15) de la table support (9) peut être bloquée dans des positions d'enclenchement prédéterminées (21, 22, 23).

6. Machine à tronçonner suivant l'une des revendications précédentes, caractérisée en ce que le guide à fente (18, 19) présente des encoches d'enclenchement (21, 22, 23) dans lesquelles une broche coulissante (17) s'enclenche lors du basculement du châssis de guidage (2).

7. Machine à tronçonner suivant la revendication 6, caractérisée en ce que les encoches d'enclenchement (22, 23) définissent un angle de coupe d'onglet de 45° ou de 30°.

8. Machine à tronçonner suivant l'une des revendications précédentes, caractérisée en ce que le guide à fente (18, 19) limite le mouvement de basculement du châssis de guidage (2).

9. Machine à tronçonner suivant l'une des revendications précédentes, caractérisée en ce qu'on peut faire basculer le châssis de guidage (2) au moyen d'un dispositif d'entraînement.

10. Machine à tronçonner suivant l'une des revendications précédentes, caractérisée en ce que le disque de tronçonnage (7) est réglable en hauteur (Fig. 3).

Fig. 1

Fig. 2

Fig. 3

# Fig. 4

# Fig. 5